# EUROPÄISCHE PATENTSCHRIFT

(11) **EP 3 838 811 B1**
(45) Veröffentlichungstag und Bekanntmachung des Hinweises auf die Patenterteilung: **30.07.2025**
(21) Anmeldenummer: 20210990.6
(22) Anmeldetag: 01.12.2020
(51) Int. Cl.: B65G 21/20, B65G 47/71

(54) **TRANSPORTMODUL FÜR ZU VERPACKENDE ARTIKEL UND VERFAHREN ZUM VORBEREITEN EINES TRANSPORTMODULS AUF EINE BEWEGUNG VON ARTIKELN**
TRANSPORT MODULE FOR ARTICLES TO BE PACKAGED UND METHOD TO PREPARE THE MODUL FOR MOVEMENT OF THE ARTICLES
MODULE DE TRANSPORT POUR ARTICLES À EMBALLER UND PROCÉDÉ DE PRÉPARATION DU MODULE DE TRANSPORT POUR LE MOUVEMENT DES ARTICLES.

(30) Priorität: 13.12.2019 DE 102019134315
(43) Veröffentlichungstag der Anmeldung: 23.06.2021
(73) Patentinhaber: KRONES Aktiengesellschaft, 93073 Neutraubling (DE)
(72) Erfinder: JUNGLAS, Florian, 93073 Neutraubling (DE); KROELL, Thorsten, 93073 Neutraubling (DE); SPINDLER, Herbert, 93073 Neutraubling (DE); WERNER, Jürgen, 93073 Neutraubling (DE)
(74) Vertreter: Benninger, Johannes

(56) Entgegenhaltungen:
- EP-A1- 2 935 054
- EP-A1- 3 112 278
- EP-A1- 3 375 737
- WO-A1-2017/080881
- DE-A1- 102016 123 770
- DE-A1- 102018 108 221
- DE-A1- 19 920 607
- DE-B3- 102015 101 930
- US-A- 4 830 173

## Beschreibung

Die vorliegende Erfindung betrifft ein Transportmodul für zu verpackende Artikel.

Sollen mehrere Artikel über Verpackungsmaterial zu einem Gebinde zusammengefasst werden, so werden diese Artikel zunächst über ein Transportmodul in mehreren benachbarten parallelen Reihen geführt. Das Transportmodul übergibt sodann die für ein jeweiliges Gebinde vorgesehenen Artikel an ein Einschlagmodul, welches auf mehrere Artikel, die für ein jeweiliges Gebinde vorgesehen sind, einen Zuschnitt an thermoplastischem Verpackungsmaterial aufbringen kann. Die mehreren Artikel können sodann mit ihrem aufgebrachten Zuschnitt durch einen Schrumpftunnel bewegt werden, worin der Zuschnitt an thermoplastischem Verpackungsmaterial auf die jeweiligen Artikel aufgeschrumpft wird. Die Artikel bilden zusammen mit dem aufgeschrumpften thermoplastischen Verpackungsmaterial ein jeweiliges Gebinde aus. Auch Transportmodule, welche Artikel zunächst in mehreren parallelen Reihen führen, woraufhin die bereits in parallelen Reihen geführten Artikel in eine Kartonage eingesetzt werden oder auf einen flächigen und durch Pappe gebildeten Verpackungszuschnitt auffahren, sind aus dem Stand der Technik bereits bekannt.

Sofern zu einem bestimmten Zeitpunkt Gebinde erstellt werden sollen, die eine erste Art oder eine erste Anzahl von Artikeln besitzen und zu einem späteren Zeitpunkt weitere Gebinde erstellt werden sollen, die eine zweite Art oder eine zweite Anzahl von Artikeln besitzen, die sich von der ersten Art oder ersten Anzahl unterscheidet, kann es notwendig sein, dass hierzu einzelne Gassenbleche aus dem Transportmodul entnommen werden müssen, weitere Gassenblech in das Transportmodul eingebracht werden müssen und/oder dass ein Abstand einzelner Gassenblech zueinander verändert werden muss. Auch kann es sein, dass an die Gassenbleche in Transportrichtung ein Keil anschließt, über welchen Artikel, die für unterschiedliche Gebinde vorgesehen sind, schräg zu ihrer Bewegungsrichtung auseinandergeführt werden. Sowohl Gassenbleche als auch derartige Keile bilden daher Formatteile, welche in der Praxis Verwendung finden, um jeweilige für ein Gebinde vorgesehen Artikel definiert führen und ausrichten zu können.

Eine solche Vorrichtung zum Erstellen von Gebinden ist beispielsweise aus der DE 10 2017 203 600 A1 bekannt. Bei diesem Dokument werden Artikel in mehreren parallelen Reihen über Fördermittel bzw. über ein Förderband bewegt. Die Reihen sind hierbei durch Gassenbleche räumlich getrennt voneinander auf dem Förderband ausgebildet. An die Gassenbleche können Führungselemente anschließen, die keilförmig angeordnet sind und benachbarte Artikelströme auseinanderbewegen.

Aus der EP 3 375 737 A1 sind ein Transportabschnitt und ein Verfahren zum Einstellen und/oder Verstellen mindestens einer Transportbahn innerhalb eines Transportabschnittes bekannt. Der Transportabschnitt umfasst eine Überschubplatte mit einer Transportfläche, auf der Artikel oder Artikelzusammenstellungen gleitend bewegt werden können. Zudem ist ein keilförmiges Führungselement vorgesehen, welches bis dahin parallel bewegte Artikelströme auseinanderführt. DE 10 2018 108221 A1 offenbart ein Transportmodul gemäß dem Oberbegriff des Anspruchs 1.

Sofern bei einer Umstellung auf unterschiedliche Artikel oder unterschiedliche herzustellende Gebinde einzelne Formatteile, wie beispielsweise Gassenblech oder Keile, aus dem Transportabschnitt entnommen oder in den Transportabschnitt eingebracht werden müssen, erfolgt dies bei aus dem Stand der Technik bekannten Vorrichtungen in der Regel manuell und ist hierdurch ggf. umständlich sowie zeitaufwändig.

Eine vorrangige Aufgabe der Erfindung ist es, ein Transportmodul bereitzustellen, welches einfach, schnell und unkompliziert umgerüstet werden kann.

Die obige Aufgabe wird durch ein Transportmodul gemäß Anspruch 1 gelöst. Ausführungsformen werden durch die abhängigen Ansprüche beschrieben.

Die Erfindung betrifft ein Transportmodul für zu verpackende Artikel wie Getränkebehälter oder dergleichen. Die Getränkebehälter können ggf. durch Getränkeflaschen bzw. PET-Flaschen und/oder durch Getränkedosen o. dgl. Artikel gebildet sein.

Das Transportmodul umfasst einen horizontalen Förderabschnitt, entlang welchen horizontalen Förderabschnittes Artikel bewegbar sind. Zur Bewegung der Artikel kann der horizontale Förderabschnitt eine Horizontalfördereinrichtung umfassen. Die Horizontalfördereinrichtung kann mindestens ein umlaufend angetriebenes Transportband besitzen, auf welchem jeweilige entlang des horizontalen Förderabschnittes bewegte Artikel aufstehen. Auch kann es sein, dass Artikel entlang des horizontalen Förderabschnittes zumindest abschnittsweise über Staudruck bewegt werden und/oder dass eine Vielzahl an Förderelementen rückseitig mit den Artikeln in Anlage treten und die Artikel sodann entlang des horizontalen Förderabschnittes bewegen bzw. schieben kann.

In diversen Ausführungsformen kann es sein, dass Artikel zunächst über die Horizontalfördereinrichtung bewegt werden, welche mindestens ein umlaufend angetriebenes Transportband umfasst. An die Horizontalfördereinrichtung bzw. an das mindestens eine umlaufend angetriebene Transportband kann wenigstens eine nachfolgend noch beschriebene Überschubplatte anschließen, wobei Artikel im Bereich der wenigstens einen Überschubplatte gleitend und ggf. unter rückseitiger Anlage an mehreren umlaufend bewegten Schubbalken fortbewegt werden.

Denkbar ist auch, dass der horizontale Förderabschnitt mindestens ein umlaufend angetriebenes Transportband umfasst, welches umlaufend angetriebene Transportband zur Bewegung von Artikeln in mehreren parallelen Reihen über als Gassenbleche ausgebildete Formatteile vorbereitet ist, welche als Gassenbleche ausgebildeten Formatteile im Bereich des mindestens einen als Bestandteil des horizontalen Förderabschnittes ausgebildeten mindestens einen umlaufend angetriebenen Transportband angeordnet werden können.

Wie vorhergehend bereits erwähnt, kann der horizontale Förderabschnitt wenigstens eine Überschubplatte umfassen, entlang welcher wenigstens einen Überschubplatte Artikel gleitend bewegbar sind und welche wenigstens eine Überschubplatte an das mindestens eine umlaufend angetriebene Transportband anschließt bzw. welches wenigstens eine Überschubplatte in einer für Artikel vorgesehenen Bewegungsrichtung unmittelbar auf das mindestens eine umlaufend angetriebene Transportband folgt.

Im Bereich der Überschubplatte kann ein keilförmiges Führungselement positionierbar sein, so dass Artikel gleitend entlang der Überschubplatte und hierbei unter Führung über das im Bereich der Überschubplatte positionierte keilförmige Führungselement bewegbar sind. Die gleitende Bewegung von Artikeln im Bereich der Überschubplatte kann weiterhin über Schubbalken bewirkt werden, welche hierzu rückseitig mit Artikeln in Anlage treten und umlaufend geführt sind.

Das Transportmodul umfasst zudem mehrere Formatteile, welche im Bereich des horizontalen Förderabschnittes angeordnet werden können, so dass Artikel während ihrer Bewegung entlang des horizontalen Förderabschnittes über die jeweiligen im Bereich des horizontalen Förderabschnittes angeordneten Formatteile geführt sind.

Erfindungsgemäß wird vorgesehen, dass wenigstens ein Formatteil der mehreren Formatteile als keilförmiges Führungselement ausgebildet ist. Ergänzend oder alternativ hierzu kann es sein, dass mindestens ein Formatteil der mehreren Formatteile als Gassenblech ausgebildet ist, über welches mindestens eine als Gassenblech ausgebildete Formatteil mehrere zur Führung von Artikel vorgesehene Gassen gebildet sind, sofern das mindestens eine als Gassenblech ausgebildete Formatteil im Bereich des horizontalen Förderabschnittes angeordnet ist.

Es ist zudem mindestens eine Handhabungsvorrichtung vorgesehen, welche zum selbständigen Anordnen von Formatteilen im Bereich des horizontalen Förderabschnittes ausgebildet sein kann. Alternativ oder ergänzend hierzu kann die mindestens eine Handhabungsvorrichtung zum selbständigen Entfernen von Formatteilen ausgebildet sein, welche Formatteile bereits im Bereich des horizontalen Förderabschnittes angeordnet sind.

Erfindungsgemäß ist vorgesehen, dass die mindestens eine Handhabungsvorrichtung als baulich integrierter Bestandteil des Transportmoduls ausgebildet ist. Somit kann die mindestens eine Handhabungsvorrichtung ausschließlich dem Transportmodul zugeordnet sein. Das Transportmodul kann eine mechanische Verbindung bereitstellen, über welche die mindestens eine Handhabungsvorrichtung als baulicher Bestandteil des Transportmodul in das Transportmodul integriert ist.

Die mechanische Verbindung kann ggf. eine werkzeuglose Entnahme der mindestens einen Handhabungsvorrichtung aus dem Transportmodul unterbinden. Das Transportmodul kann stützende und/oder tragende Elemente besitzen, mit welchen die mindestens eine Handhabungsvorrichtung mechanisch verbunden ist. In diversen Ausführungsformen kann die mindestens eine Handhabungsvorrichtung als Industrieroboter bzw. Mehrachsroboter ausgebildet sein.

Auch ist vorstellbar, dass die mindestens eine Handhabungsvorrichtung als Deltakinematik-Roboter ausgebildet ist.

Es ist denkbar, dass die mindestens eine Handhabungsvorrichtung an einem Maschinenrahmen des Transportmoduls mechanisch befestigt ist und/oder dass die mindestens eine Handhabungsvorrichtung einen Maschinenrahmen des Transportmoduls ausbildet.

Die mindestens eine Handhabungsvorrichtung kann ggf. zur Entnahme von Schubbalken aus dem Transportmodul und/oder zur Installation von Schubbalken im Transportmodul ausgebildet sein, welche Schubbalken, wie vorhergehend bereits erwähnt, rückseitig mit Artikeln in Anlage treten können und die Artikel unter rückseitiger Anlage ggf. gleitend über die Überschubplatte oder ein Transportband bewegen.

Das Transportmodul kann eine die Peripherie des Transportmoduls bereitstellende Rahmenkonstruktion umfassen, wobei die mindestens eine Handhabungsvorrichtung mechanisch mit der die Peripherie des Transportmoduls bereitstellenden Rahmenkonstruktion verbunden ist und/oder wobei die mindestens eine Handhabungsvorrichtung eine die Peripherie des Transportmoduls bereitstellende Rahmenkonstruktion zumindest bereichsweise ausbildet.

Es kann sein, dass die mindestens eine Handhabungsvorrichtung hängend von der die Peripherie des Transportmoduls bereitstellenden Rahmenkonstruktion getragen wird.

Auch kann die mindestens eine Handhabungsvorrichtung als Portalsystem ausgebildet sein und/oder in ein als Bestandteil des Transportmoduls ausgebildetes Portalsystem integriert sein. Hierbei kann es sein, dass das die mindestens eine als Portalsystem ausgebildete Handhabungsvorrichtung mechanisch mit einem Maschinenrahmen des Transportmoduls verbunden ist.

Alternativ oder ergänzend hierzu kann es sein, dass das Portalsystem, in welches die mindestens eine Handhabungsvorrichtung integriert ist, mechanisch mit einem Maschinenrahmen des Transportmoduls verbunden ist. Derartige Ausführungsformen besitzen einen einfachen Aufbau und sind kostengünstig in der Herstellung.

Auch hat die Praxis gezeigt, dass ein Umgang mit Formatteilen bei solchen Ausführungsformen mit hoher Zuverlässigkeit und einer geringen Wahrscheinlichkeit von Fehlern bzw. Problemen bei der Umstellung des Transportmoduls einhergeht.

Denkbar ist, dass die mindestens eine Handhabungsvorrichtung eine Linearführung umfasst, über welche mindestens eine Linearführung die mindestens eine Handhabungsvorrichtung eine in vertikaler Richtung orientierte Stellbewegung ausführen kann.

Beispielsweise kann die mindestens eine Linearführung ein drehend antreibbares Ritzel sowie eine Zahnstange umfassen, welche miteinander kämmend in Eingriff stehen, so dass die Zahnstange über einen drehenden Antrieb des Ritzels eine in vertikaler Richtung orientierte Stellbewegung ausführen kann. Mit der Zahnstange kann ein Greifkopf der mindestens einen Handhabungsvorrichtung derart verbunden sein, dass der Greifkopf eine jeweilige in vertikaler Richtung orientierte Stellbewegung zusammen mit der Zahnstange ausführt.

Darüber hinaus kann mindestens ein Formatteil der mehreren Formatteile als Gassenblech ausgebildet sein, über welches mindestens eine als Gassenblech ausgebildete Formatteil im Bereich des horizontalen Förderabschnittes angeordnet mehrere zur Führung von Artikeln vorgesehene Gassen gebildet sind.

Die mindestens eine Handhabungsvorrichtung kann mindestens ein Klemm- und/oder Greifelement zum Entgegennehmen des mindestens einen als Gassenblech ausgebildeten Formatteiles aufweisen.

Weiter kann das Transportmodul mindestens einen Speicher umfassen, welcher in einem Arbeitsbereich der mindestens einen Handhabungsvorrichtung positioniert bzw. angeordnet ist und welcher das mindestens eine als Gassenblech ausgebildete Formatteil über eine Steck- und/oder Klemmverbindung lösbar aufnehmen kann.

Der mindestens eine Speicher kann einen ersten Speicherblock und einen zweiten Speicherblock umfassen, wobei der erste Speicherblock und der zweite Speicherblock jeweils mehrere Bohrungen besitzen bzw. aufweisen. Hierbei kann es sein, dass ein jeweiliges als Gassenblech ausgebildetes Formatteil durch Einstecken in eine erste Öffnung des ersten Speicherblocks und durch zusätzliches Einstecken in eine weitere Öffnung des zweiten Speicherblocks über den Speicher aufnehmbar ist.

Alternativ ist an einen Einsatz lediglich eines Speicherblocks gedacht, welcher ein als Gassenblech ausgebildetes Formatteil aufnehmen kann. Beispielsweise kann dieser eine Speicherblock etwas größer ausgebildet sein und/oder vorzugsweise mindestens zwei Bohrungen bzw. Steckplätze für ein als Gassenblech ausgebildetes Formatteil aufweisen.

Der Speicher kann in solchen Ausführungsformen und auch in diversen weiteren Ausführungsformen als baulich integrierter Bestandteil des Transportmoduls ausgebildet sein bzw. mechanisch mit einem Maschinenrahmen des Transportmoduls verbunden sein.

Insbesondere kann es sein, dass der Speicher (insbesondere der eine oder zwei Blöcke) zumindest bereichsweise auf einer Höhe (Abstand vom Boden) angeordnet ist, welche sich zwischen einem oberen Maschinenrahmen des Transportmoduls und einer Transportfläche (Transportband, Überschubplatte) der Artikel bzw. Behälter befindet. Insbesondere kann er in Transportrichtung der Artikel seitlich der Transportfläche angeordnet sein.

Auch kann es sein, dass der Speicher entfernt des Transportmoduls angeordnet ist, wobei ein fahrerloses Transportsystem Formatteile bedarfsweise aus dem entfernt des Transportmoduls angeordneten Speicher entnimmt und der mindestens einen Handhabungsvorrichtung zum Einbringen in den horizontalen Förderabschnitt übergibt.

Alternativ oder ergänzend hierzu kann es sein, dass das fahrerloses Transportsystem von der mindestens einen Handhabungsvorrichtung aus dem horizontalen Förderabschnitt entnommene Formatteile entgegennimmt und in den entfernt des Transportmoduls angeordneten Speicher verbringt.

Ein derartiges fahrerloses Transportsystem kann angetriebene Rollen aufweisen, welche über einen Boden rollen können.

Auch kann das mindestens eine als Gassenblech ausgebildete Formatteil einen ersten Bereich und einen zweiten Bereich ausbilden, welcher erste Bereich und welcher zweite Bereich in Längsrichtung des mindestens einen als Gassenblech ausgebildeten Formatteiles zueinander versetzt sind. Der erste Bereich kann gegenüber dem zweiten Bereich eine geringere Biegesteifigkeit aufweisen.

Zudem kann vorgesehen sein, dass die mindestens eine Handhabungsvorrichtung mindestens zwei Klemm- und/oder Greifelemente sowie wenigstens ein Stabilisierungselement aufweist, wobei die mindestens zwei Klemm- und/oder Greifelemente und das wenigstens eine Stabilisierungselement zur gemeinsamen Entgegennahme eines jeweiligen als Gassenblech ausgebildeten Formatteiles vorbereitet sind. Das Stabilisierungselement kann u.U. lediglich optional vorhanden sein.

Die mindestens zwei Klemm- und/oder Greifelemente können zum form- und/oder kraftschlüssigen Entgegennehmen des jeweiligen mindestens einen als Gassenblech ausgebildeten Formatteils über den zweiten Bereich ausgebildet sein und das wenigstens eine Stabilisierungselement kann zum form- und/oder kraftschlüssigen Entgegennehmen bzw. Führen des jeweiligen mindestens einen als Gassenblech ausgebildeten Formatteils über den ersten Bereich ausgebildet sein.

Das Stabilisierungselement kann U-förmig ausgebildet sein und ggf. den ersten Bereich zur Entgegennahme des jeweiligen mindestens einen als Gassenblech ausgebildeten Formatteiles formschlüssig umgreifen. Die mindestens zwei Klemm- und/oder Greifelemente können jeweils zwei Greiffinger umfassen, welche zur Entgegennahme des jeweiligen mindestens einen als Gassenblech ausgebildeten Formatteiles auf gegenüberliegenden Seiten des jeweiligen zweiten Bereichs angeordnet eine Zustellbewegung ausführen können, so dass die jeweiligen Greiffinger das jeweilige mindestens eine als Gassenblech ausgebildete Formatteil über den zweiten Bereich klemmend bzw. kraftbeaufschlagt halten.

Die mindestens eine Handhabungsvorrichtung kann einen Greifkopf tragen, welcher Greifkopf die mindestens zwei Klemm- und/oder Greifelemente sowie das Stabilisierungselement ausgebildet. Der Greifkopf kann abnehmbar bzw. lösbar an der mindestens einen Handhabungsvorrichtung befestigt sein.

Bei dem Transportmodul kann wenigstens ein Formatteil der mehreren Formatteile als keilförmiges Führungselement für Artikel ausgebildet sein.

Erfindungsgemäß weist die mindestens eine Handhabungsvorrichtung mindestens ein Werkzeug zum Entgegennehmen des wenigstens einen als keilförmiges Führungselement ausgebildeten Formatteiles auf.

Es kann sein, dass selektiv das mindestens eine Werkzeug, welches zum Entgegennehmen des wenigstens einen als keilförmiges Führungselement ausgebildeten Formatteiles vorgesehen ist oder der Greifkopf, welcher die mindestens zwei Klemm- und/oder Greifelemente sowie das Stabilisierungselement ausbildet, an der mindestens einen Handhabungsvorrichtung angeordnet werden können.

Insbesondere haben sich Ausführungsformen bewährt, bei welchen die mindestens eine Handhabungsvorrichtung selbständig bzw. automatisch zwischen dem mindestens einen Werkzeug, welches zum Entgegennehmen des wenigstens einen als keilförmiges Führungselement ausgebildeten Formatteiles vorgesehen ist und dem Greifkopf, welcher die mindestens zwei Klemm- und/oder Greifelemente sowie das Stabilisierungselement ausbildet, tauschen bzw. wechseln kann.

Zusätzlich oder alternativ kann vorgesehen sein, dass ein Greifkopf (bzw. die daran angeordneten Klemm- und/oder Greifelemente), der zum Entgegennehmen des mindestens einen als Gassenblech ausgebildeten Formatteiles ausgebildet ist, zusätzlich zur Entgegennahme des Werkzeugs, welches zum Entgegennehmen des wenigstens einen als keilförmiges Führungselement ausgebildeten Formatteiles vorgesehen ist, ausgebildet ist.

In anderen Worten kann es sein, dass die am Greifkopf angeordneten Klemm- und/oder Greifelemente nicht nur als Gassenblech ausgebildete Formatteile entgegennehmen können, sondern auch Werkzeuge zur Auf- bzw. Entgegennahme weiterer Teile - im konkreten Fall der keilförmigen Führungselemente.

Nochmal in anderen Worten: der Greifkopf kann also ohne weiteres Gassenbleche austauschen, benötigt aber für die Keile zusätzlich ein Werkzeug, um diese aufnehmen und/oder in den geeigneten Speicherplatz legen bzw. stecken zu können.

Für das Werkzeug kann ebenfalls ein weiterer Speicher vorgesehen sein, welcher im Zugriffsbereich der Handhabungsvorrichtung angeordnet ist - alternativ kann einer oder beide der Speicher für die als Gassenblech ausgebildeten Formatteile und/oder der Speicher für die Keile als Speicher für das Werkzeug vorgesehen sein.

Erfindungsgemäß ist vorgesehen, dass das mindestens eine Werkzeug mindestens einen Vorsprung und/oder mindestens eine Zinke aufweist oder durch mindestens einen Vorsprung und/oder durch mindestens eine Zinke ausgebildet ist.

Das wenigstens eine als keilförmiges Führungselement für Artikel ausgebildete Formatteil weist erfindungsgemäß wenigstens eine Öffnung auf, in welche wenigstens eine Öffnung der mindestens eine Vorsprung und/oder die mindestens eine Zinke zur Entgegennahmen des wenigstens einen als keilförmiges Führungselement ausgebildeten Formatteiles formschlüssig eintauchen kann. Der mindestens eine Vorsprung und/oder die mindestens eine Zinke kann eine horizontale Orientierung besitzen.

In einer weiteren Ausführungsform können die Klemm- und/oder Greifelemente sowohl das mindestens eine als Gassenblech ausgebildete Formatteil als auch das mindestens eine als keilförmiges Führungselement ausgebildete Formatteil aufnehmen und in einen bzw. die mehreren Speicher transportieren.

Das Transportmodul umfasst erfindungsgemäß ein Lager, welches mehrere Speicherplätze für mehrere jeweils als keilförmiges Führungselement ausgebildete Formatteile bereitstellt. Die mehreren Speicherplätze sind höhenverstellbar.

Jeder der mehreren Speicherplätze kann mindestens einen Dorn und/oder Zapfen besitzen, auf welchen das jeweilige als keilförmiges Führungselement ausgebildete Formatteil aufgesteckt werden kann. Der jeweilige mindestens eine Dorn- und/oder Zapfen kann hierbei in eine jeweilige korrespondierende Aussparung des jeweiligen als keilförmiges Führungselement ausgebildeten Formatteiles eintauchen.

Weiter ist das Lager erfindungsgemäß derart angeordnet, dass die mehreren Speicherplätze über eine jeweilige erste Höhenverstellung in einen Arbeitsbereich der mindestens einen Handhabungsvorrichtung gelangen und über eine weitere Höhenverstellung in entgegengesetzter Richtung den Arbeitsbereich der mindestens einen Handhabungsvorrichtung verlassen.

Auch kann das wenigstens eine Lager mit den mehreren Speicherplätzen nach dem Paternoster-Prinzip arbeiten.

Die Erfindung betrifft zudem eine Verpackungsstrecke gemäß Anspruch 9. Auch umfasst die Verpackungsstrecke ein Verpackungsmodul.

Es ist vorgesehen, dass das Verpackungsmodul zum Aufbringen von Verpackungsmaterial auf jeweilige über das Transportmodul bewegte Artikel ausgebildet ist und dass das Verpackungsmodul in einer für die Artikel vorgesehenen Förder- und/oder Bewegungsrichtung der Verpackungsstrecke auf das Transportmodul folgt.

Es wird zudem ein Verfahren zum Vorbereiten eines Transportmoduls auf eine Bewegung von Artikeln beschrieben. Merkmale, welche vorhergehend bereits zu diversen Ausführungsformen des Transportmoduls genannt wurden, können weiterhin für das nachfolgende Verfahren vorgesehen sein und werden nicht mehrfach erwähnt. Ebenso können nachfolgend zu diversen Ausführungsformen des Verfahrens beschriebene Merkmale bei dem vorhergehend bereits beschriebenen Transportmodul vorgesehen sein.

Das Transportmodul, welches bei dem Verfahren auf eine Bewegung von Artikeln vorbereitet wird, umfasst einen horizontalen Förderabschnitt, entlang welchen horizontalen Förderabschnittes Artikel bewegbar sind.

Weiter umfasst das Transportmodul, welches bei dem Verfahren auf eine Bewegung von Artikeln vorbereitet wird, mehrere Formatteile, welche mehreren Formatteile im Bereich des horizontalen Förderabschnittes angeordnet werden können, so dass Artikel während ihrer Bewegung entlang des horizontalen Förderabschnittes über die jeweiligen im Bereich des horizontalen Förderabschnittes angeordneten Formatteile geführt sind.

Im Rahmen eines Verfahrensschrittes erfolgt ein Anpassen des Transportmoduls an eine bevorstehende definierte Bewegung von Artikeln, wozu mindestens ein Formatteil im Bereich des horizontalen Förderabschnittes angeordnet wird und/oder wozu mindestens ein bereits im Bereich des horizontalen Förderabschnittes angeordnetes Formatteil aus dem Bereich des horizontalen Förderabschnittes entfernt wird.

Es ist vorgesehen, dass das Anordnen des mindestens einen Formatteiles im Bereich des horizontalen Förderabschnittes und/oder das Entfernen des mindestens einen Formatteiles aus dem Bereich des horizontalen Förderabschnittes über mindestens eine Handhabungsvorrichtung selbständig vorgenommen wird, welche mindestens eine Handhabungsvorrichtung baulich in das Transportmodul integriert ist.

Es kann sein, dass das Anordnen des mindestens einen Formatteiles im Bereich des horizontalen Förderabschnittes und/oder das Entfernen des mindestens einen Formatteiles aus dem Bereich des horizontalen Förderabschnittes über mindestens eine Handhabungsvorrichtung selbständig vorgenommen wird, bei welcher mindestens einen Handhabungsvorrichtung es sich um ein Portalsystem handelt oder welche mindestens eine Handhabungsvorrichtung hierzu von einem Portalsystem geführt wird.

Vorstellbar ist auch, dass die mindestens eine Handhabungsvorrichtung zum Anordnen des mindestens einen Formatteils im Bereich des horizontalen Förderabschnittes und/oder zum Entfernen des mindestens einen Formatteiles aus dem Bereich des horizontalen Förderabschnittes über eine Linearführung eine in vertikaler Richtung orientierte Stellbewegung ausführt.

Weiter kann das mindestens eine Formatteil, welches zum Anpassen des Transportmoduls an eine bevorstehende Bewegung von Artikeln im Bereich des horizontalen Förderabschnittes angeordnet und/oder aus dem Bereich des horizontalen Förderabschnittes entfernt wird, mindestens ein Gassenblech umfassen oder durch mindestens ein Gassenblech ausgebildet sein.

Bei dem Verfahren kann es hierbei sein, dass das mindestens eine Gassenblech über die mindestens eine Handhabungsvorrichtung aus einem Speicher entnommen und über die mindestens eine Handhabungsvorrichtung im Bereich des horizontalen Förderabschnittes angeordnet wird.

Alternativ oder ergänzend hierzu kann es sein, dass das mindestens eine Gassenblech über die mindestens eine Handhabungsvorrichtung aus dem Bereich des horizontalen Förderabschnittes entfernt wird und zeitlich hierauf folgend in den Speicher überführt wird, wozu das mindestens eine aus dem Bereich des horizontalen Förderabschnittes entnommene bzw. entfernte Gassenblech vorzugsweise in den Speicher eingesteckt wird.

In diversen Ausführungsformen kann es sein, dass das mindestens eine Gassenblech einen ersten Bereich und einen zweiten Bereich ausbildet, welcher erste Bereich und welcher zweite Bereich in Längsrichtung des mindestens einen Gassenblechs versetzt zueinander sind. Der erste Bereich kann gegenüber dem zweiten Bereich eine geringere Biegesteifigkeit aufweisen.

Bei dem Verfahren kann es hierbei sein, dass die mindestens eine Handhabungsvorrichtung zum Entnehmen des mindestens einen Gassenblechs aus dem Speicher und/oder zum Überführen des mindestens einen Gassenblechs in den Speicher über mindestens zwei Klemm- und/oder Greifelemente form- und/oder kraftschlüssig am zweiten Bereich angreift und über wenigstens ein Stabilisierungselement form -und/oder kraftschlüssig mit dem ersten Bereich in Verbindung trifft bzw. gelangt.

Es kann sein, dass das mindestens eine Formatteil, welches zum Anpassen des Transportmoduls an eine bevorstehende definierte Bewegung von Artikeln im Bereich des horizontalen Förderabschnittes angeordnet und/oder aus dem Bereich des horizontalen Förderabschnittes entfernt wird, wenigstens ein keilförmiges Führungselement umfasst.

Bei dem Verfahren kann es sodann sein, dass das wenigstens eine keilförmige Führungselement über die mindestens eine Handhabungsvorrichtung aus einem Lager entnommen und über die mindestens eine Handhabungsvorrichtung im Bereich des horizontalen Förderabschnittes angeordnet wird.

Alternativ oder ergänzend hierzu kann es sein, dass das wenigstens eine keilförmige Führungselement über die mindestens eine Handhabungsvorrichtung aus dem Bereich des horizontalen Förderabschnittes entfernt wird und zeitlich hierauf folgend in das Lager überführt wird.

Vorstellbar ist auch, dass das Lager mehrere Speicherplätze für mehrere jeweils als keilförmiges Führungselement ausgebildete Formatteile bereitstellt. Hierbei kann es sein, dass ein jeweiliger Speicherplatz mit einem jeweiligen aufgenommenen Formatteil, welches als keilförmiges Führungselement ausgebildet ist, in Richtung der mindestens einen Handhabungsvorrichtung bewegt wird, woraufhin die mindestens eine Handhabungsvorrichtung das jeweilige in Richtung der mindestens einen Handhabungsvorrichtung bewegte Formatteil, welches als keilförmiges Führungselement ausgebildet ist, aus dem jeweiligen Speicherplatz entnimmt und im Bereich des horizontalen Förderabschnittes anordnet.

Alternativ oder ergänzend hierzu kann es sein, dass ein jeweiliger leerer Speicherplatz in Richtung der mindestens einen Handhabungsvorrichtung bewegt wird, woraufhin die mindestens eine Handhabungsvorrichtung ein jeweiliges aus dem Bereich des horizontalen Förderabschnittes entferntes keilförmiges Führungselement in den leeren und in Richtung der mindestens einen Handhabungsvorrichtung bewegten Speicherplatz einbringt.

Auch kann es sein, dass das Lager zum Bewegen eines jeweiligen Speicherplatzes zusammen mit einem jeweiligen aufgenommenen Formatteil in Richtung der mindestens einen Handhabungsvorrichtung und/oder zum Bewegen eines leeren Speicherplatzes in Richtung der mindestens einen Handhabungsvorrichtung nach dem Paternoster-Prinzip arbeitet.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische und perspektivische Ansicht einer ersten Ausführungsform eines erfindungsgemäßen Transportmoduls.
Fig 2 zeigt eine weitere schematische und perspektivische Ansicht des Transportmoduls gemäß Fig. 1
Fig. 3 zeigt eine schematische Perspektivansicht eines Speichers, wie er als Bestanteil in diversen Ausführungsformen eines erfindungsgemäßen Transportmoduls vorgesehen sein kann.
Fig. 4 zeigt in schematischer und perspektivischer Ansicht einzelne Details des Speichers aus der Ausführungsform des Speichers und/oder des Transportmoduls gemäß Fig. 3.
Fig. 5 zeigt einen Teil einer Handhabungsvorrichtung, wie sie bei diversen Ausführungsformen eines erfindungsgemäßen Transportmoduls vorgesehen sein kann.
Figuren 6 bis 9 zeigen in verschiedenen schematischen Darstellungen weitere Details der Handhabungsvorrichtung gemäß dem Ausführungsbeispiel aus Fig.5.
Figuren 10 und 11 zeigen jeweils eine schematische und perspektivische Ansicht einer Ausführungsform eines Lagers zur Aufnahme von Formatteilen, welche durch keilförmige Führungselemente ausgebildet sind.

Für gleiche oder gleich wirkende Elemente der Erfindung werden in der Regel jeweils gleiche Bezugsziffern verwendet. Ferner werden der Übersicht halber in einzelnen Fällen nur solche Bezugszeichen in den einzelnen Figuren dargestellt, die für die Beschreibung der jeweiligen Figur erforderlich oder sinnvoll sind. Die dargestellten Ausführungsformen stellen lediglich Beispiele dar, wie die Erfindung ausgestaltet sein kann und stellen keine abschließende Begrenzung dar.

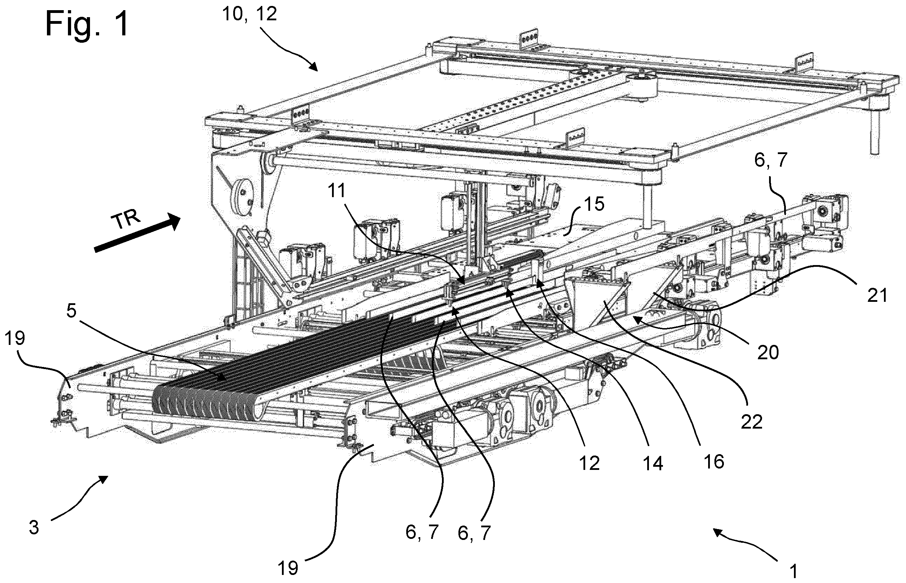

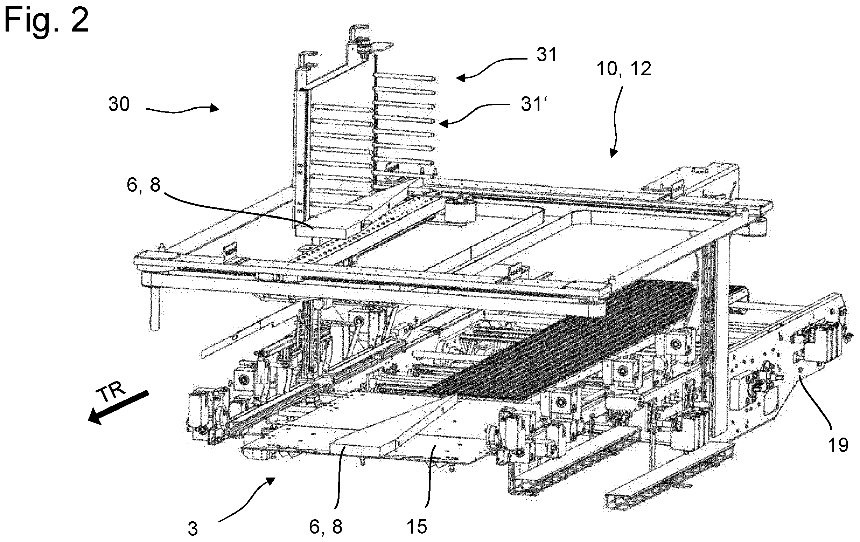

Die Fig. 1 zeigt eine schematische Ansicht einer ersten Ausführungsform eines erfindungsgemäßen Transportmoduls 1. Das Transportmodul 1 umfasst einen horizontalen Förderabschnitt 3, welcher vorliegend eine Horizontalfördereinrichtung 5 sowie eine an die Horizontalfördereinrichtung 5 in einer Transportrichtung TR anschließende Überschubplatte 15 (vgl. auch Fig. 2) besitzt.

Die Horizontalfördereinrichtung 5 kann durch ein umlaufend angetriebenes Transportband oder aber auch durch mehrere nebeneinander angeordnete und jeweils umlaufend angetriebene Transportbänder gebildet sein. Mittels des Transportmoduls 1 werden Artikel oder z.B. Getränkebehälter, welche in den Figuren nicht dargestellt sind, entlang der Transportrichtung TR bewegt.

Bevor Verpackungsmaterial auf die in den Figuren der Patentanmeldung nicht mit dargestellten Getränkebehälter aufgebracht wird, ist es erforderlich, zunächst Gruppierungen aus den Getränkebehältern herzustellen. Zunächst werden hierzu Getränkebehälter ungeordnet geführt und anschließend mittels des Transportmoduls 1 in mehreren parallelen Reihen bewegt.

Die schematische Ansicht der Fig. 1 lässt hierbei erkennen, dass im Bereich des horizontalen Förderabschnittes 3 mehrere Formatteile 6 angeordnet sind, bei welchen es sich in Fig. 1 um Gassenbleche 7 handelt. Zwischen unmittelbar benachbarten Formatteilen 6 bzw. zwischen unmittelbar benachbarten Gassenblechen 7 werden Getränkebehälter jeweils als einreihiger Getränkebehälterstrom bewegt.

Dem Transportmodul 1 ist normalerweise ein in den beigefügten Figuren nicht mit dargestelltes Verpackungsmodul nachgeordnet, in dem insbesondere ein geeignetes Verpackungsmaterial auf die Artikel oder Getränkebehälter aufgebracht wird, nachdem diese zuvor in parallelen Reihen bewegt wurden.

Die Formatteile 6 bzw. Gassenbleche 7 sind nach Anzahl und relativer Beabstandung derart angeordnet, dass nach dem Transport in parallelen Reihen aus mehreren Getränkebehältern ein Gebinde hergestellt werden kann, dass eine bestimmte Art an Getränkebehältern, eine bestimmte Anzahl an Getränkebehältern und eine bestimmte Ausrichtung der Getränkebehälter zueinander besitzt.

So existieren in der Praxis unterschiedliche Gebinde, welche beispielsweise vier Getränkebehälter, sechs Getränkebehälter oder auch mehr als sechs Getränkebehälter umfassen können. Auch können Gebinde mehrere Getränkebehälter umfassen, die als Getränkeflasche ausgebildet sind. Bekannt sind zudem Gebinde, welche mehrere Getränkebehälter umfassen, die jeweils als Getränkedose ausgebildet sind.

Sollen über eine Verpackungsstrecke zunächst erste Gebinde hergestellt werden und zu einem späteren Zeitpunkt zweite Gebinde, die sich von den ersten Gebinden unterscheiden, so ist es hierzu notwendig, einzelne Formatteile 6 bzw. Gassenblech 7 aus dem Bereich des horizontalen Förderabschnittes 3 zu entnehmen oder weitere Formatteile 6 bzw. Gassenblech 7 im Bereich des horizontalen Förderabschnittes 3 anzuordnen. Unterschiedliche Getränkebehälter können zudem unterschiedliche Durchmesser besitzen.

Um zu vermeiden, dass solche unterschiedlichen Getränkebehälter bei einer Umstellung des Transportmoduls 1 nicht zwischen den Gassenblechen 7 klemmen oder ungewollt aufgrund einer zu groß gewählten Beabstandung von unmittelbar benachbarten Gassenblechen 7 kippen, muss die jeweilige relative Beabstandung von unmittelbar benachbarten Gassenblechen 7 bei einer Umstellung des Transportmoduls 1 zusätzlich angepasst werden. In der Praxis werden hierzu bei aus dem Stand der Technik bekannten Modulen zunächst sämtliche Gassenbleche 7 von einem Benutzer aus dem Transportmodul 1 entfernt.

Da die Gassenbleche 7 jeweils an einem zugehörigen Träger angeordnet sind, welcher sich unterhalb oderoberhalb einer Förderebene des horizontalen Förderabschnittes 3 befindet, wird hierzu in einem ersten Schritt eine Verbindung zwischen dem jeweiligen Träger und dem jeweiligen Gassenblech 7 aufgehoben und das jeweilige Gassenblech 7 sodann aus dem Transportmodul 1 genommen.

Erst wenn sämtliche Gassenbleche 7 aus dem Transportmodul 1 entnommen sind, wird die relative Beabstandung der Träger zueinander angepasst, worauf zeitlich folgend die Gassenbleche 7 sodann erneut mit der definierten relativen Beabstandung an ihrem jeweiligen zugeordneten Träger festgesetzt werden.

Für das manuelle bzw. händische Entfernen der Gassenbleche 7 sowie das hierauf folgende erneute Anordnen im Bereich des horizontalen Förderabschnittes 3 ist jeweils mindestens eine Person bzw. ein Bediener erforderlich, welcher das Entnehmen der Gassenbleche 7 aus dem Bereich des horizontalen Förderabschnittes 3 und das erneute Verbinden mit den Trägern vornimmt. Auch ist eine solche Umstellung zeitaufwändig, weshalb Transportmodule 1 wünschenswert sind, welche auf vereinfachte Art und Weise sowie zeitoptimiert umgerüstet werden können.

Das Transportmodul 1 gemäß dem Ausführungsbeispiel, wie es in den Figuren 1 und 2 beispielhaft dargestellt ist, umfasst zum Zwecke des Umrüstens eine Handhabungsvorrichtung 10, welche als Portalsystem 12 ausgebildet ist.

Die Handhabungsvorrichtung 10 bzw. das Portalsystem 12 ist als baulich integrierter Bestandteil des Transportmoduls 1 ausgebildet und somit baulich fest mit dem Transportmodul 1 verbunden bzw. baulich fest mit dem Transportmodul 1 verknüpft. Wie dies insbesondere in der nachfolgend erläuterten Fig. 2 gut zu erkennen ist, ist das Portalsystem 12 hierzu mechanisch fest mit einem Maschinenrahmen 19 des Transportmoduls 1 verbunden.

Ein Arbeitsbereich der Handhabungsvorrichtung 10 bzw. ein Arbeitsbereich des Portalsystems 12 ist ausschließlich dem Transportmodul 1 zugeordnet, so dass die Handhabungsvorrichtung 10 bzw. das Portalsystem 12 keine Manipulationsaufgaben für weitere Module übernehmen kann, welche dem Transportmodul 1 in einer Transportrichtung TR der Getränkebehälter vorgeordnet oder nachgeordnet sind.

Soll das Transportmodul 1 entsprechend umgerüstet werden, so werden hierzu Gassenbleche 7 über die Handhabungsvorrichtung 10 bzw. über das Portalsystem 12 aus dem Bereich des horizontalen Förderabschnittes 3 entnommen sowie bedarfsweise im Bereich des horizontalen Förderabschnittes 3 angeordnet.

Die Fig. 1 lässt hierbei erkennen, dass die Handhabungsvorrichtung 10 einen Greifkopf 11 mit einem ersten Klemm- und/oder Greifelement 12, einem zweiten Klemm- und/oder Greifelement 14 sowie mit einem Stabilisierungselement 16 umfasst.

Die Handhabungsvorrichtung 10 bzw. das Portalsystem 12 kann seinen Greifkopf 11 zusammen mit dem ersten Klemm- und/oder Greifelement 12, dem zweiten Klemm- und/oder Greifelement 14 sowie dem Stabilisierungselement 16 in drei unterschiedlichen Raumrichtungen bewegen.

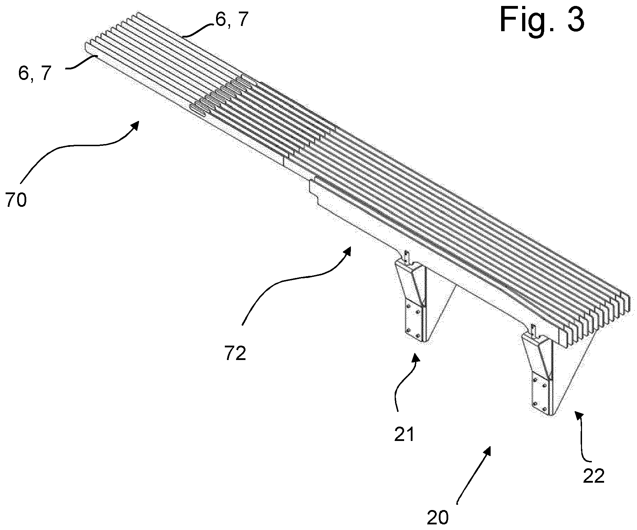

Unter zusätzlicher Berücksichtigung der in Fig. 3 detailliert dargestellten Ausgestaltung der Gassenbleche 7 wird deutlich, dass jedes der Gassenbleche 7 einen ersten Bereich 70 und einen zweiten Bereich 72 besitzt, wobei der erste Bereich 70 und der zweite Bereich 72 aneinander anschließen und in Längsrichtung des Gassenblechs 7 zueinander versetzt sind. Der erste Bereich 70 zeichnet sich gegenüber dem zweiten Bereich 72 dadurch aus, dass der erste Bereich 70 gegenüber dem zweiten Bereich 72 eine geringere Biegesteifigkeit besitzt. Der erste Bereich 70 ist somit elastisch bzw. federnd und kann bis zu einem gewissen Ausmaß an einen gewünschten Verlauf der jeweiligen zu bildenden Gasse angepasst werden.

Sofern ein jeweiliges Gassenblech 7 im Bereich des horizontalen Förderabschnittes 3 angeordnet werden soll oder aus dem Bereich des horizontalen Förderabschnittes 3 entnommen werden soll, bewegt die Handhabungsvorrichtung 10 bzw. das Portalsystem 12 den Greifkopf 11 in Richtung des jeweiligen Gassenblechs 7. Anschließend wird das jeweilige Gassenblech 7 im zweiten Bereich 72 über das erste Klemm- und/oder Greifelement 12 und über das zweite Klemm- und/oder Greifelement 14 jeweils gegriffen.

Um zu verhindern, dass der gegenüber dem zweiten Bereich 72 eine reduzierte Biegesteifigkeit aufweisende erste Bereich 70 des jeweiligen erfassten Gassenblechs 7 während seiner Bewegung ungewollt elastisch verformt wird bzw. ungewollt federt, umgreift das Stabilisierungselement 16 den jeweiligen ersten Bereich 70 des jeweiligen gegriffenen Gassenblechs 7 formschlüssig.

Das Stabilisierungselement 16 ist hierzu U-förmig ausgebildet. Da das jeweilige Gassenblech 7 bereits fest über das erste Klemm- und/oder Greifelement 12 und das zweite Klemm- und/oder Greifelement 14 gegriffen ist, muss der jeweilige erste Bereich 70 des jeweiligen Gassenblechs 7 nicht klemmend gehalten sein, so dass eine formschlüssige Fixierung des jeweiligen ersten Bereichs 70 über das Stabilisierungselement 16 ausreichend sein kann, um das jeweilige Gassenblech 7 sicher über die Handhabungsvorrichtung 10 bzw. über das Portalsystem 12 transportieren zu können.

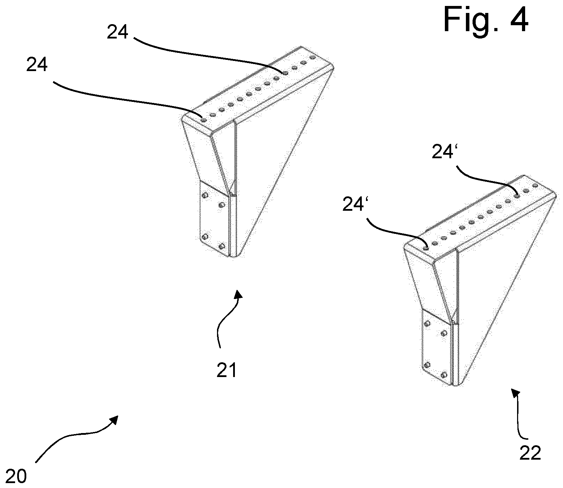

Wie der schematischen Darstellung der Fig. 1 darüber hinaus zu entnehmen ist, umfasst das Transportmodul 1 einen Speicher 20, welcher seitlich der Horizontalfördereinrichtung 5 bzw. seitlich des Überschubblechs 15 angeordnet ist. Eine detaillierte Ausgestaltung der Ausführungsform eines Speichers 20, wie er als Bestandteil des Transportmoduls 1 in den Figuren 1 und 2 ausgebildet ist, kann den Figuren 3 und 4 entnommen werden.

Der Speicher 20 ist aus einem ersten Speicherblock 21 und aus einem zweiten Speicherblock 23 gebildet, die im Ausführungsbeispiel nach Figuren 1 und 2 an einem Maschinenrahmen 19 des Transportmoduls 1 befestigt sind bzw. von einem Maschinenrahmen 19 getragen werden. Mit diesem Maschinenrahmen 19 ist auch die als Portalsystem 12 ausgebildete Handhabungsvorrichtung 10, wie vorhergehend bereits erwähnt, fest verbunden.

Denkbar ist jedoch auch, dass ein entsprechender Speicher 20 neben der Horizontalfördereinrichtung 5 aufgestellt ist, ohne dass ein solcher Speicher 20 unmittelbar mit einer Trag- und/oder Rahmenkonstruktion verbunden ist.

Auch können fahrerloses Transportsysteme vorgesehen sein, welche die jeweiligen aus dem Bereich des horizontalen Förderabschnittes 3 entnommenen Gassenbleche 7 in einen entfernt des Transportmoduls 1 angeordneten Speicher verbringen oder aus einem entfernt des Transportmoduls 1 angeordneten Speicher entnehmen und der Handhabungsvorrichtung 10 zum Einbringen in den horizontalen Förderabschnitt 3 bereitstellen.

Um Gassenbelche 7 aus dem Speicher 20 bedarfsweise entnehmen zu können und um Gassenbleche 7 in den Speicher 20 einbringen zu können, erstreckt sich ein Arbeitsbereich der als Portalsystem 12 ausgebildeten Handhabungsvorrichtung 10 über den Speicher 20.

Die perspektivischen Detailansichten der Fig. 4 zeigen zudem, dass der erste Speicherblock 21 und der zweite Speicherblock 22 des Speicher 20 jeweils mehrere Bohrungen 24 bzw. 24' ausbilden oder aufweisen können. Über jeweils eine Bohrung 24 des ersten Speicherblocks 21 und jeweils eine Bohrung 24' des zweiten Speicherblocks 22 wird ein jeweiliges als Gassenblech 7 ausgebildetes Formatteil 6 in den Speicher 20 eingesteckt und kann sodann im Speicher 20 verbleiben, bis das jeweilige als Gassenblech 7 ausgebildete Formatteil 6 zum Bilden einer Gasse im Bereich des horizontalen Förderabschnittes 3 benötigt wird.

Die Fig. 2 zeigt eine weitere Ansicht des Transportmoduls 1 der Ausführungsform gemäß Fig. 1, wobei hier die Transportrichtung TR in eine Richtung aus der Zeichnungsebene heraus (nach schräg links unten) weist.

In dieser Fig. 2 ist nun die Überschubplatte 15 gut zu erkennen, wobei auf der Überschubplatte 15 in Fig. 2 ein Formatteil 6, welches als keilförmiges Führungselement 8 ausgebildet ist, angeordnet wurde. Unter Zuhilfenahme des keilförmigen Führungselementes 8 können Artikel oder Getränkebehälter vor einem Aufbringen von Verpackungsmaterial auseinanderbewegt werden. Entlang der Überschubplatte 15 werden die jeweiligen Artikel oder Getränkebehälter hierbei gleitend bewegt.

Das Auflegen des keilförmigen Führungselementes 8 auf die Überschubplatte 15 kann weiterhin mittels der Handhabungsvorrichtung 10 bzw. mittels des Portalsystems 12 erfolgen, welche Handhabungsvorrichtung 10 bzw. welches Portalsystem 12 in Fig. 2 aus Gründen der Übersichtlichkeit nicht vollständig dargestellt ist.

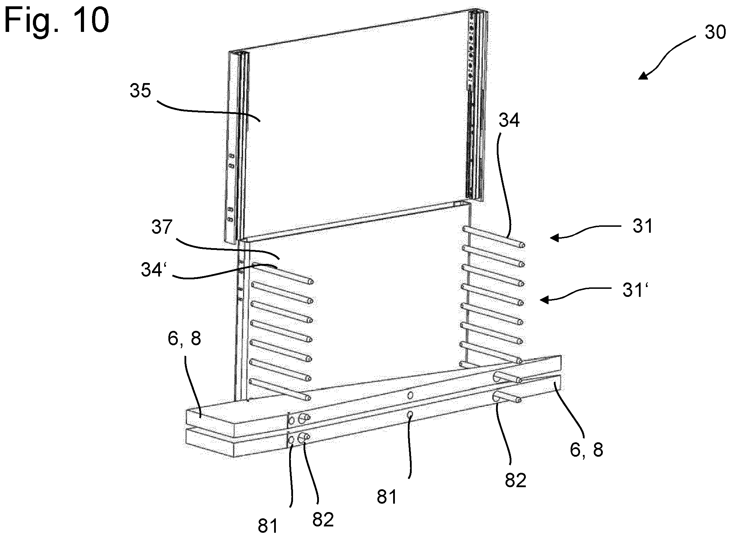

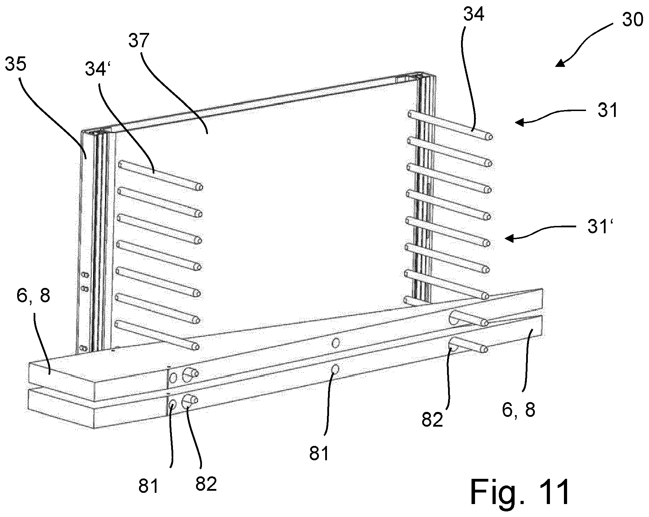

Wie insbesondere in den Figuren 10 und 11 jeweils gut zu erkennen ist, besitzt ein jeweiliges keilförmiges Führungselement 8 zwei erste Öffnungen 81 und darüber hinaus zwei zweite Öffnungen 82. Über die ersten Öffnungen 81 kann die als Portalsystem 12 ausgebildete Handhabungsvorrichtung 10 in ein jeweiliges keilförmiges Führungselement 8 formschlüssig eintauchen und das jeweilige keilförmige Führungselement 8 sodann in ein Lager 30 bewegen, welches Lager 30 in Fig. 2 dargestellt ist und in den Figuren 10 und 11 nochmals detailliert gezeigt wird. Auch kann die Handhabungsvorrichtung 10 über die zwei ersten Öffnungen 81 in ein jeweiliges keilförmiges Führungselement 8 formschlüssig eintauchen und das jeweilige keilförmige Führungselement 8 hierauf folgend aus dem Lager 30 entnehmen und im Bereich des horizontalen Förderabschnittes 3 anordnen.

Um in die ersten Öffnungen 81 des keilförmigen Führungselementes 8 einzutauchen, kann die als Portalsystem 12 ausgebildete Handhabungsvorrichtung 10 ein Werkzeug aufnehmen, welches ggf. über eine Gabel, mehrere Zinken und/oder mehrere Vorsprünge verfügt, die mit den ersten Öffnungen 81 korrespondieren. Sofern ein keilförmiges Führungselement 8 aufgenommen werden soll, kann die als Portalsystem 12 ausgebildete Handhabungsvorrichtung 10 vorhergehend den Greifkopf 11, welcher das erste Klemm- und/oder Greifelement 12, das zweite Klemm- und/oder Greifelement 14 sowie das Stabilisierungselement 16 besitzt, ablegen und zeitlich hierauf folgend das Werkzeug zum Eintauchen in die ersten Öffnungen 81 aufnehmen.

Ein solcher Austausch des zum Aufnehmen von Gassenblechen 7 vorgesehenen Greifkopfes 11 gegen ein zum Entgegennehmen von keilförmigen Führungselementen 8 ausgebildetes Werkzeug kann über die als Portalsystem 12 ausgebildete Handhabungsvorrichtung 10 selbständig bzw. vollautomatisch vorgenommen werden.

Wie bereits diskutiert, kann alternativ vorgesehen sein, dass der Greiferkopf 11 selbst ständig an der Handhabungsvorrichtung 10 verbleibt und selbst das Werkzeug zum Entgegennehmen von keilförmigen Führungselementen 8 aufnimmt.

Der jeweils nicht benötigte Greifkopf 11 und/oder das jeweils nicht benötigte Werkzeug kann in einem Magazin zwischengespeichert werden, welches in den Figuren der vorliegenden Patentanmeldung nicht mit dargestellt ist und ggf. in das Transportmodul 1 integriert sein kann.

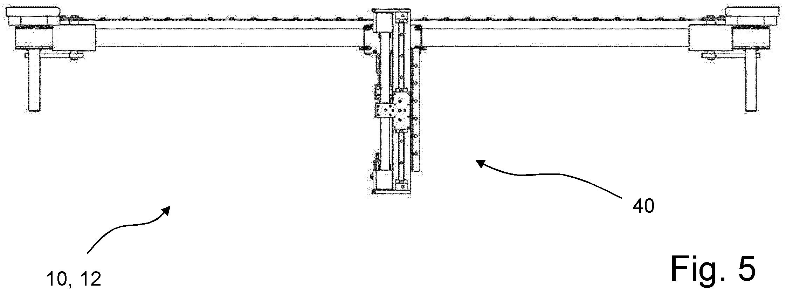

Details zur Handhabungsvorrichtung 10, welche als Portalsystem 12 ausgebildet ist, sind den Figuren 5 bis 9 zu entnehmen.

Die Fig. 5 zeigt insbesondere, dass die als Portalsystem 12 ausgebildete Handhabungsvorrichtung 10 über eine Linearführung 40 verfügt, an welcher der Greifkopf 11 gemäß Fig. 1 und/oder ein Werkzeug zur Aufnahme von keilförmigen Formatteilen 8 befestigt werden kann.

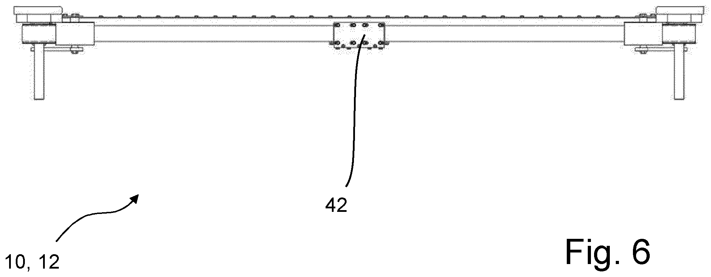

Die Fig. 6 zeigt darüber hinaus einen Verbindungsabschnitt 42, an welchem die Linearführung 40 angeordnet ist.

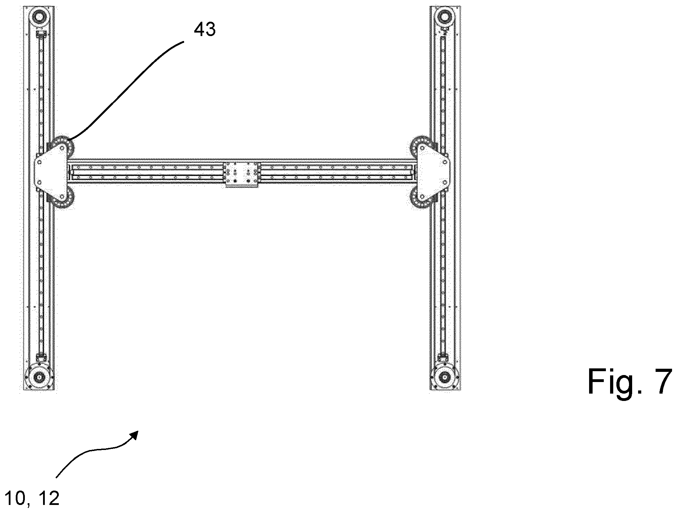

Die Draufsicht der Fig. 7 lässt zudem erkennen, dass die als Portalsystem 12 ausgebildete Handhabungsvorrichtung 10 zur Bewegung der Linearführung 40 und des hieran befestigen Greifkopfes 11 und/oder Werkzeuges mehrere Umlenkrollen oder Umlenkzahnräder 43, 43b und 83a/b für einen daran umlaufend befestigten Riemen 43a, insbesondere Zahnriemen, besitzt.

Der Riemen 43a kann über zwei nicht gezeigte Antriebe bzw. Motoren angetrieben werden, welche ihrerseits jeweils eine der Umlenkrollen oder Umlenkzahnräder 83a/b antreiben. Der Riemen kann mit seinen Enden an dem Schlitten 85c (siehe auch Verbindungsabschnitt 42) befestigt sein, an welchem auch die Linearführung 40 angeordnet ist und welcher entlang einer zweiten Linearführung 84c verfahrbar ist.

Die Linearführung 84c kann wiederum an zwei Schlitten 85a und 85b angeordnet sein, welche jeweils entlang einer dritten 84a und vierten Linearführung 84b verschiebbar angeordnet sind. Auf den Schlitten 85a/b können die Umlenkrollen oder Umlenkzahnräder 43b für den Riemen 43a drehbar angeordnet sein.

Je nach Drehrichtung der zwei Antriebe und ob nur einer oder beide Antriebe gleichzeitig aktiv sind, wird die Linearführung 40 bzw. ihr Schlitten entlang zweier senkrecht aufeinander stehenden Achsen x1 / y1 oder schräg dazu in einer horizontalen Ebene bewegt.

Insbesondere können die zwei Antriebe durch eine entsprechende Steuerung synchronisiert angesteuert werden.

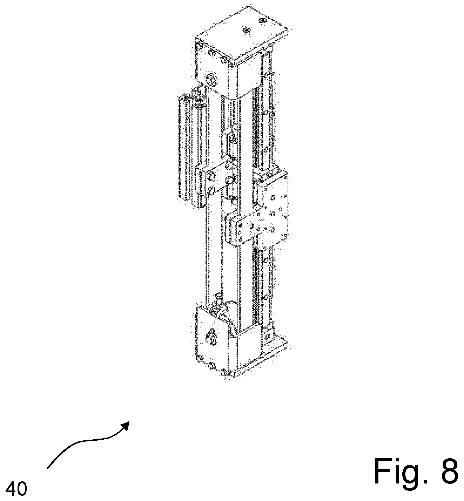

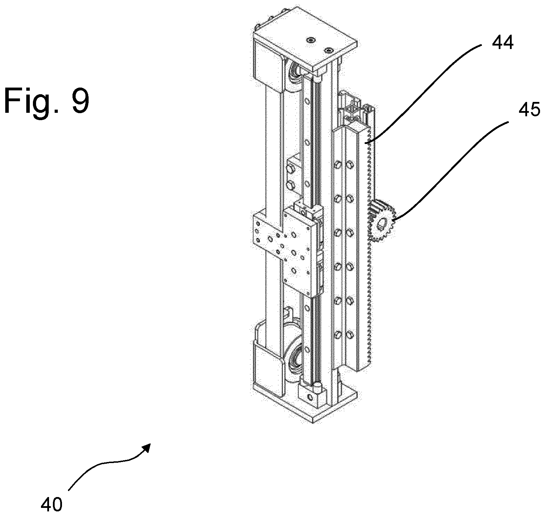

Die Figuren 8 und 9 zeigen jeweils die Linearführung 40 im Detail, über welche der Greifkopf 11 oder das an der Linearführung 40 befestigte Werkzeug in vertikaler Richtung bewegt werden können.

Wie in Fig. 9 zu erkennen, umfasst die Linearführung 40 eine Zahnstange 44 sowie ein Ritzel 45, welches mit der Zahnstange 44 kämmend in Eingriff steht. Durch eine drehende Bewegung des Ritzels 45 werden die Zahnstange 44 sowie der an der Linearführung 40 angeordnete Greifkopf 11 bzw. das an der Linearführung 40 angeordnete Werkzeug in vertikaler Richtung bewegt.

Die Figuren 10 und 11 zeigen jeweils eine schematische Ansicht einer Ausführungsform eines Lagers 30 zur Aufnahme von Formatteilen 6, welche durch keilförmige Führungselemente 8 ausgebildet sind. Das Lager 30 besitzt mehrere in vertikaler Richtung zueinander versetzte Speicherplätze 31 und 31', wobei durch jeweils einen Speicherplatz 31 bzw. 31' jeweils ein als keilförmiges Führungselement 8 ausgebildetes Formatteil 6 aufgenommen werden kann.

Ein jeweiliger Speicherplatz 31 bzw. 31' ist durch jeweils zwei Zapfen 34 bzw. 34' gebildet, welche eine zumindest näherungsweise horizontale Orientierung besitzen und auf welche ein jeweiliges als keilförmiges Führungselement 8 über seine jeweiligen zweiten Öffnungen 81 aufgesteckt werden kann.

Wie weiter oben bereits erläutert wurde, kann eine jeweilige Handhabungsvorrichtung 10 über die jeweiligen ersten Öffnungen 81 in ein jeweiliges keilförmiges Führungselement 8 formschlüssig eintauchen und das jeweilige keilförmige Führungselement 8 sodann aus dem Lager 30 entnehmen.

Das Lager 30 umfasst ein erstes Teil 35 und ein zweites Teil 37. Sämtliche Zapfen 34 und 34' bzw. sämtliche Speicherplätze 31 bzw. 31 werden über das zweite Teil 37 des Lagers 30 ausgebildet oder sind an dem zweiten Teil 37 des Lagers 30 befestigt. Das erste Teil 35 kann als ortsfester Bestandteil des Transportmoduls 1 ausgebildet sein, wohingegen das zweite Teil 37 relativ zum ersten Teil 35 in vertikaler Richtung bewegbar ist. Dies wird bei einer Zusammenschau der Figuren 10 und 11 deutlich.

Sofern die als Portalsystem 12 ausgebildete Handhabungsvorrichtung 10 ein keilförmiges Führungselement 8 aus dem Lager 30 entnehmen will und/oder sofern die als Portalsystem 12 ausgebildete Handhabungsvorrichtung 10 ein keilförmiges Führungselement 8 in die als Portalsystem 12 ausgebildete Handhabungsvorrichtung 10 einbringen möchte, kann das zweite Teil 37 aus der Position nach Fig. 11 relativ zum ersten Teil bewegt werden und in die Position nach Fig. 10 gelangen. Hierdurch werden die jeweiligen Speicherplätze 31 und 31' in Richtung der Handhabungsvorrichtung 10 bewegt, so dass die Handhabungsvorrichtung 10 lediglich einen geringen Weg zurücklegen muss, um ein jeweiliges keilförmiges Führungselement 8 in das Lager 30 einbringen zu können bzw. um ein jeweiliges keilförmiges Führungselement 8 aus dem Lager 30 entnehmen zu können.

In alternativen Ausführungsformen kann eine Bewegung der Speicherplätze 31 bzw. 31' bewirkt werden, indem ein jeweiliges Lager 30 nach dem Paternoster-Prinzip arbeitet.

Wenn auch im Zusammenhang der Figuren generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise des erfindungsgemäßen Transportmoduls ein besseres Verständnis für den in den Ansprüchen sowie im allgemeinen Teil der Beschreibung allgemeiner und/oder abstrakter formulierten Erfindungsgedanken abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

1 Transportmodul
3 Horizontaler Förderabschnitt
5 Horizontalfördereinrichtung
6 Formatteil
7 Gassenblech
12 Erstes Klemm- und/oder Greifelement
14 Zweites Klemm- und/oder Greifelement
15 Überschubplatte
16 Stabilisierungselement
19 Maschinenrahmen
20 Speicher
21 Erster Speicherblock
22 Zweiter Speicherblock
24 Bohrung (erster Speicherblock)
24' Bohrung (zweiter Speicherblock)
30 Lager
31 Speicherplatz
31' Speicherplatz
31" Speicherplatz
34 Zapfen
34' Zapfen
35 Erster Teil
37 Zweiter Teil
40 Linearführung
42 Verbindungsabschnitt
43 Rolle
44 Zahnstange
45 Ritzel
81 Erste Öffnung
82 Zweite Öffnung
83 Antriebsräder
TR Transportrichtung

## Patentansprüche

1. Transportmodul (1) für zu verpackende Artikel wie Getränkebehälter oder dergleichen, umfassend
- einen horizontalen Förderabschnitt (3), entlang welchen horizontalen Förderabschnittes (3) Artikel bewegbar sind und
- mehrere Formatteile (6), welche im Bereich des horizontalen Förderabschnittes (6) angeordnet werden können, so dass Artikel während ihrer Bewegung entlang des horizontalen Förderabschnittes (3) über die jeweiligen im Bereich des horizontalen Förderabschnittes (3) angeordneten Formatteile (6) geführt sind, sowie umfassend
- mindestens eine Handhabungsvorrichtung (10), welche
a) zum selbständigen Anordnen von Formatteilen (6) im Bereich des horizontalen Förderabschnittes (3) ausgebildet ist, und/oder welche mindestens eine Handhabungsvorrichtung (10)
b) zum selbständigen Entfernen von Formatteilen (6) ausgebildet ist, welche Formatteile (6) bereits im Bereich des horizontalen Förderabschnittes (3) angeordnet sind,
wobei bei dem Transportmodul (1) die mindestens eine Handhabungsvorrichtung (10) als baulich integrierter Bestandteil des Transportmoduls (1) ausgebildet ist, **dadurch gekennzeichnet, dass**
- wenigstens ein Formatteil (6) der mehreren Formatteile (6) als keilförmiges Führungselement (8) für Artikel ausgebildet ist und bei welchem die mindestens eine Handhabungsvorrichtung (10) mindestens ein Werkzeug zum Entgegennehmen des wenigstens einen als keilförmiges Führungselement (8) ausgebildeten Formatteiles (6) aufweist, wobei das Transportmodul (1)
- wenigstens ein Lager (30) umfasst, welches mehrere Speicherplätze (31, 31') für mehrere jeweils als keilförmiges Führungselement (8) ausgebildete Formatteile (6) bereitstellt, wobei die mehreren Speicherplätze (31, 31') jeweils höhenverstellbar sind und wobei
- das Lager (30) derart angeordnet ist, dass die mehreren Speicherplätze (31, 31') über eine jeweilige erste Höhenverstellung in einen Arbeitsbereich der mindestens einen Handhabungsvorrichtung (10) gelangen und über eine weitere Höhenverstellung in entgegengesetzter Richtung den Arbeitsbereich der mindestens einen Handhabungsvorrichtung (10) verlassen und wobei das mindestens eine Werkzeug
- mindestens einen Vorsprung und/oder mindestens eine Zinke aufweist oder durch mindestens einen Vorsprung und/oder durch mindestens eine Zinke ausgebildet ist, und wobei
- das wenigstens eine als keilförmiges Führungselement (8) für Artikel ausgebildete Formatteil (6) wenigstens eine Öffnung (81) aufweist, in welche wenigstens eine Öffnung (81) der mindestens eine Vorsprung und/oder die mindestens eine Zinke zur Entgegennahme des wenigstens einen als keilförmiges Führungselement (8) ausgebildeten Formatteiles (6) formschlüssig eintauchbar ist.

2. Transportmodul nach Anspruch 1, umfassend eine die Peripherie des Transportmoduls (1) bereitstellende Rahmenkonstruktion, wobei die mindestens eine Handhabungsvorrichtung (10) mechanisch mit der die Peripherie des Transportmoduls (1) bereitstellenden Rahmenkonstruktion verbunden ist, und/oder bei welchem Transportmodul (1) die mindestens eine Handhabungsvorrichtung (10) eine die Peripherie des Transportmoduls (1) bereitstellende Rahmenkonstruktion zumindest bereichsweise ausbildet.

3. Transportmodul nach Anspruch 1 oder Anspruch 2, bei welchem die Handhabungsvorrichtung (10) als Portalsystem (12) ausgebildet ist und/oder in ein als Bestandteil des Transportmoduls (1) ausgebildetes Portalsystem (12) integriert ist.

4. Transportmodul nach einem der Ansprüche 1 bis 3, bei welchem die mindestens eine Handhabungsvorrichtung (1) eine Linearführung (40) umfasst, über welche mindestens einen Linearführung (40) die mindestens eine Handhabungsvorrichtung (10) eine in vertikaler Richtung orientierte Stellbewegung ausführen kann.

5. Transportmodul nach einem der Ansprüche 1 bis 4, bei welchem mindestens ein Formatteil (6) der mehreren Formatteile (6) als Gassenblech (7) ausgebildet ist, über welches mindestens eine als Gassenblech (7) ausgebildete Formatteil (6) im Bereich des horizontalen Förderabschnittes (3) angeordnet mehrere zur Führung von Artikeln vorgesehene Gassen gebildet sind, und wobei die mindestens eine Handhabungsvorrichtung (10) mindestens ein Klemm- und/oder Greifelement (12, 14) zum Entgegennehmen des mindestens einen als Gassenblech (7) ausgebildeten Formatteiles (6) aufweist.

6. Transportmodul nach Anspruch 5, umfassend mindestens einen Speicher (20), welcher in einem Arbeitsbereich der mindestens einen Handhabungsvorrichtung (10) positioniert ist und welcher das mindestens eine als Gassenblech (7) ausgebildete Formatteil (6) über eine Steck- und/oder Klemmverbindung lösbar aufnehmen kann.

7. Transportmodul nach Anspruch 5 oder Anspruch 6, bei welchem
- das mindestens eine als Gassenblech (7) ausgebildete Formatteil (6) einen ersten Bereich (70) und einen zweiten Bereich (72) ausbildet, welcher erste Bereich (70) und welcher zweite Bereich (72) in Längsrichtung des mindestens einen als Gassenblech (7) ausgebildeten Formatteiles (6) zueinander versetzt sind, wobei der erste Bereich (70) gegenüber dem zweiten Bereich (72) eine geringere Biegesteifigkeit aufweist und bei welchem Transportmodul (1) vorgesehen ist, dass
- die mindestens eine Handhabungsvorrichtung (10) mindestens zwei Klemm- und/oder Greifelemente (12, 14) sowie wenigstens ein Stabilisierungselement (16) aufweist, wobei die mindestens zwei Klemm- und/oder Greifelemente (12, 14) und das wenigstens eine Stabilisierungselement (16) zur gemeinsamen Entgegennahme eines jeweiligen als Gassenblech (7) ausgebildeten Formatteiles (6) vorbereitet sind und wobei
- die mindestens zwei Klemm- und/oder Greifelemente (12, 14) zum form- und/oder kraftschlüssigen Entgegennehmen des mindestens einen als Gassenblech (7) ausgebildeten Formatteils (6) über den zweiten Bereich (72) ausgebildet sind und wobei das wenigstens eine Stabilisierungselement (16) zum form- und/oder kraftschlüssigen Entgegennehmen des jeweiligen mindestens einen als Gassenblech (7) ausgebildeten Formatteils (6) über den ersten Bereich (70) ausgebildet ist.

8. Transportmodul nach einem der Ansprüche 1 bis 7, bei welchem das wenigstens eine Lager (30) mit den mehreren Speicherplätzen (31, 31') nach dem Paternoster-Prinzip arbeitet.

9. Verpackungsstrecke, umfassend ein Transportmodul (1) gemäß einem der Ansprüche 1 bis 8 sowie ein Verpackungsmodul (1), welches Verpackungsmodul (1) zum Aufbringen von Verpackungsmaterial auf jeweilige über das Transportmodul (1) bewegte Artikel ausgebildet ist, wobei das Verpackungsmodul in einer für die Artikel vorgesehenen Förder- und/oder Bewegungsrichtung der Verpackungstrecke auf das Transportmodul (1) folgt.

## Claims

1. A transport module (1) for articles to be packaged, such as beverage containers or the like, the transport module (1) comprising
- a horizontal conveyor section (3), along which horizontal conveyor section (3) articles are movable, and
- a plurality of format parts (6), which can be arranged in the area of the horizontal conveyor section (3) such that articles are guided over the particular format parts (6) arranged in the area of the horizontal conveyor section (3) during their movement along the horizontal conveyor section (3), and the transport module (1) also comprising
- at least one handling device (10), which
a) is designed for the independent arrangement of format parts (6) in the area of the horizontal conveyor section (3), and/or which has at least one handling device (10)
b) is designed for the independent removal of format parts (6), which format parts (6) are already arranged in the area of the horizontal conveyor section (3),
wherein in the case of the transport module (1), the at least one handling device (10) is designed as a structurally integrated component of the transport module (1),
**characterised in that**
- at least one format part (6) of the plurality of format parts (6) is designed as a wedge-shaped guide element (8) for articles, and in which the at least one handling device (10) has at least one tool in order to receive the at least one format part (6) designed as a wedge-shaped guide element (8), wherein the transport module (1)
- comprises at least one bearing (30), which provides a plurality of storage locations (31, 31') for a plurality of format parts (6) each designed as a wedge-shaped guide element (8), wherein the plurality of storage locations (31, 31') are each height-adjustable, and wherein
- the bearing (30) is arranged such that the plurality of storage locations (31, 31') enter into a working range of the at least one handling device (10) via a particular first height adjustment and leave the working range of the at least one handling device (10) in the opposite direction via a further height adjustment, and wherein the at least one tool
- has at least one projection and/or at least one pin or is formed by at least one projection and/or at least one pin, and wherein
- the at least one format part (6) designed as a wedge-shaped guide element (8) for articles has at least one opening (81), into which at least one opening (81) the at least one projection and/or the at least one pin is insertable in a form-fitting manner in order to receive the at least one format part (6) designed as a wedge-shaped guide element (8).

2. The transport module according to claim 1, comprising a frame structure providing the periphery of the transport module (1), wherein the at least one handling device (10) is mechanically connected to the frame structure providing the periphery of the transport module (1), and/or in which transport module (1) the at least one handling device (10) at least in some areas forms a frame structure providing the periphery of the transport module (1).

3. The transport module according to claim 1 or claim 2, in which the handling device (10) is designed as a gantry system (12) and/or is integrated into a gantry system (12) designed as a component of the transport module (1).

4. The transport module according to one of the claims 1 to 3, in which the at least one handling device (1) comprises a linear guide (40), via which at least one linear guide (40) the at least one handling device (10) can perform an adjusting movement oriented in vertical direction.

5. The transport module according to one of the claims 1 to 4, in which at least one format part (6) of the plurality of format parts (6) is designed as a lane guide (7), via which at least one format part (6) designed as lane guide (7), a plurality of lanes arranged in the area of the horizontal conveyor section (3) and provided in order to guide articles are formed, and wherein the at least one handling device (10) has at least one clamping element and/or gripping element (12, 14) in order to receive the at least one format part (6) designed as lane guide (7).

6. The transport module according to claim 5, comprising at least one storage (20), which is positioned in a working range of the at least one handling device (10), and which can detachably receive the at least one format part (6) designed as lane guide (7) via a plug-in connection and/or clamping connection.

7. The transport module according to claim 5 or claim 6, in which
- the at least one format part (6) designed as lane guide (7) forms a first area (70) and a second area (72), which first area (70) and which second area (72) are offset relative to one another in the longitudinal direction of the at least one format part (6) designed as lane guide (7), wherein the first area (70) has a lower bending stiffness in relation to the second area (72), and in which transport module (1) it is provided that
- the at least one handling device (10) has at least two clamping elements and/or gripping elements (12, 14) and at least one stabilising element (16), wherein the at least two clamping elements and/or gripping elements (12, 14) and the at least one stabilising element (16) are prepared to jointly receive a particular format part (6) designed as lane guide (7), and wherein
- the at least two clamping elements and/or gripping elements (12, 14) are designed to receive the at least one format part (6), which is designed as a lane guide (7), in a form-locking and/or force-locking manner via the second area (72), and wherein the at least one stabilising element (16) is designed to receive the particular at least one format part (6), which is designed as a lane guide (7), in a form-locking and/or force-locking manner via the first area (70).

8. The transport module according to one of the claims 1 to 7, in which the at least one bearing (30) with the plurality of storage locations (31, 31') operates according to the paternoster principle.

9. A packaging line, comprising a transport module (1) according to one of the claims 1 to 8 and a packaging module (1), which packaging module (1) is designed for the application of packaging material onto particular articles that are being moved via the transport module (1), wherein the packaging module follows the transport module (1) in a conveying and/or movement direction of the packaging line provided for the articles.

## Revendications

1. Module de transport (1) pour des articles à emballer, tels que des récipients à boissons ou similaires, comprenant
- une section de transport horizontale (3), c'est le long de laquelle section de transport horizontale (3) que des articles peuvent être déplacés et
- une pluralité de pièces de format (6) qui peuvent être disposées au niveau de la section de transport horizontale (3) de sorte que, pendant leur mouvement le long de la section de transport horizontale (3), des articles sont guidés sur les pièces de format (6) respectives disposées au niveau de la section de transport horizontale (3), et comprenant
- au moins un dispositif de manipulation (10) qui
a) est conçu pour la disposition indépendante de pièces de format (6) au niveau de la section de transport horizontale (3), et/ou lequel au moins un dispositif de manipulation (10)
b) est conçu pour l'enlèvement indépendant de pièces de format (6), lesquelles pièces de format (6) sont déjà disposées au niveau de la section de transport horizontale (3),
dans lequel, dans le module de transport (1), ledit au moins un dispositif de manipulation (10) est conçu en tant que composant constructivement intégré du module de transport (1),
**caractérisé par le fait que**
- au moins une pièce de format (6) de la pluralité de pièces de format (6) est conçue en tant qu'élément de guidage (8) en forme de coin pour des articles et dans lequel ledit au moins un dispositif de manipulation (10) comprend au moins un outil pour recevoir ladite au moins une pièce de format (6) conçue comme élément de guidage (8) en forme de coin, dans lequel ledit module de transport (1)
- comprend au moins un dispositif de stockage (30) qui fournit une pluralité d'emplacements de stockage (31, 31') pour une pluralité de pièces de format (6) conçues chacune comme élément de guidage (8) en forme de coin, dans lequel les plusieurs emplacements de stockage (31, 31') sont chacun réglable en hauteur, et dans lequel
- le dispositif de stockage (30) est agencé de telle sorte que la pluralité d'emplacements de stockage (31, 31') atteignent une zone de travail dudit au moins un dispositif de manipulation (10) via un premier réglage de hauteur respectif et quittent la zone de travail dudit au moins un dispositif de manipulation (10) via un autre réglage de hauteur dans la direction opposée, et dans lequel ledit au moins un outil
- comprend au moins une saillie et/ou au moins une dent ou est formé par au moins une saillie et/ou par au moins une dent, et dans lequel
- ladite au moins une pièce de format (6) conçue comme élément de guidage (8) en forme de coin pour des articles présente au moins une ouverture (81), c'est dans laquelle au moins une ouverture (81) que ladite au moins une saillie et/ou ladite au moins une dent peut être insérée à engagement positif pour recevoir ladite au moins une pièce de format (6) conçue comme élément de guidage (8) en forme de coin.

2. Module de transport selon la revendication 1, comprenant une construction de cadre fournissant la périphérie du module de transport (1), dans lequel ledit au moins un dispositif de manipulation (10) est relié mécaniquement à la construction de cadre fournissant la périphérie du module de transport (1), et/ou dans lequel module de transport (1) ledit au moins un dispositif de manipulation (10) forme, au moins par zones, une construction de cadre fournissant la périphérie du module de transport (1).

3. Module de transport selon la revendication 1 ou la revendication 2, dans lequel le dispositif de manipulation (10) est conçu en tant que système de portail (12) et/ou est intégré à un système de portail (12) conçu en tant que composant du module de transport (1).

4. Module de transport selon l'une quelconque des revendications 1 à 3, dans lequel ledit au moins un dispositif de manipulation (1) comprend un guide linéaire (40), c'est par l'intermédiaire duquel au moins un guide linéaire (40) que ledit au moins un dispositif de manipulation (10) peut effectuer un mouvement de réglage orienté dans la direction verticale.

5. Module de transport selon l'une quelconque des revendications 1 à 4, dans lequel au moins une pièce de format (6) de la pluralité de pièces de format (6) est réalisée sous forme de tôle de ruelle (7), par l'intermédiaire de laquelle au moins une pièce de format (6) réalisée sous forme de tôle de ruelle (7) disposée au niveau de la section de transport horizontale (3) est formée une pluralité de ruelles prévues pour le guidage d'articles, et dans lequel ledit au moins un dispositif de manipulation (10) présente au moins un élément de serrage et/ou de préhension (12, 14) pour recevoir ladite au moins une pièce de format (6) réalisée sous forme de tôle de ruelle (7).

6. Module de transport selon la revendication 5, comprenant au moins un dispositif de stockage (20) qui est positionné dans une zone de travail dudit au moins un dispositif de manipulation (10) et qui peut recevoir de manière amovible ladite au moins une pièce de format (6) conçue en tant que tôle de ruelle (7) par l'intermédiaire d'une liaison par emboîtement et/ou par serrage.

7. Module de transport selon la revendication 5 ou la revendication 6, dans lequel
- ladite au moins une pièce de format (6) conçue en tant que tôle de ruelle (7) forme une première zone (70) et une deuxième zone (72), lesquelles première zone (70) et deuxième zone (72) sont décalées l'une par rapport à l'autre dans la direction longitudinale de ladite au moins une pièce de format (6) conçue en tant que tôle de ruelle (7), dans lequel la première zone (70) présente une rigidité à la flexion inférieure à celle de la deuxième zone (72), et dans lequel module de transport (1) il est prévu que
- ledit au moins un dispositif de manipulation (10) comprend au moins deux éléments de serrage et/ou de préhension (12, 14) ainsi qu'au moins un élément de stabilisation (16), dans lequel lesdits au moins deux éléments de serrage et/ou de préhension (12, 14) et ledit au moins un élément de stabilisation (16) sont préparés pour recevoir en commun une pièce de format (6) respective conçue en tant que tôle de ruelle (7), et dans lequel
- lesdits au moins deux éléments de serrage et/ou de préhension (12, 14) sont conçus pour la réception à engagement positif et/ou par adhérence de ladite au moins une pièce de format (6) conçue en tant que tôle de ruelle (7) via la deuxième zone (72) et dans lequel ledit au moins un élément de stabilisation (16) est conçu pour la réception à engagement positif et/ou par adhérence de ladite au moins une pièce de format (6) respective conçue en tant que tôle de ruelle (7) via la première zone (70).

8. Module de transport selon l'une quelconque des revendications 1 à 7, dans lequel ledit au moins un dispositif de stockage (30) comprenant la pluralité d'emplacements de stockage (31, 31') fonctionnent selon le principe paternoster.

9. Ligne d'emballage, comprenant un module de transport (1) selon l'une quelconque des revendications 1 à 8 ainsi qu'un module d'emballage (1), lequel module d'emballage (1) est conçu pour appliquer du matériau d'emballage sur des articles respectifs déplacés via le module de transport (1), dans lequel le module d'emballage suit le module de transport (1) dans une direction de transport et/ou de déplacement de la ligne d'emballage, prévue pour les articles.
